# EUROPEAN PATENT SPECIFICATION

(11) **EP 2 691 466 B1**
(45) Date of publication and mention of the grant of the patent: **27.12.2017**
(21) Application number: 12709760.8
(22) Date of filing: 06.03.2012
(51) Int. Cl.: C08L 79/02, B01J 19/06, C08K 3/16, C08K 5/16

(54) **CURABLE COMPOSITION, ARTICLE, METHOD OF CURING, AND REACTION PRODUCT**
HÄRTBARE ZUSAMMENSETZUNG, ARTIKEL, HÄRTUNGSVERFAHREN, UND REAKTIONSPRODUKT
COMPOSITION DURCISSABLE, ARTICLE, PROCÉDÉ DE DURCISSEMENT ET PRODUIT DE RÉACTION

(30) Priority: 28.03.2011 US 201161468313 P
(43) Date of publication of application: 05.02.2014
(73) Proprietor: 3M Innovative Properties Company, St. Paul, MN 55133-3427 (US)
(72) Inventor: GORODISHER, Ilya, Saint Paul, Minnesota 55133-3427 (US)
(74) Representative: Herzog, Fiesser & Partner Patentanwälte PartG mbB
(86) International application number: PCT/US2012/027816
(87) International publication number: WO 2012/134731

(56) References cited:
- WO-A1-95/12647
- WO-A1-2008/095837
- WO-A1-2008/095850
- WO-A1-2011/025652
- WO-A2-2013/012587
- US-A- 4 507 428

## Description

### BACKGROUND

In their simplest form, 3-substituted-3,4-dihydro-2*H*-1,3-benzoxazines (hereinafter referred to as 3-substituted benzoxazines) are compounds containing the following structural unit: 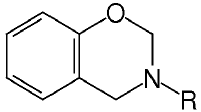 wherein R represents a monovalent organic group. In many cases, they are further substituted at one or more of the ring carbons. In those cases wherein R contains one or more aromatic groups, the 3-substituted benzoxazines may be highly viscous or even solid under ambient conditions. 3-Substituted benzoxazines typically homopolymerize at elevated temperature.

U.S. Patent No. 4,501,864 (Higginbottom) reports a curable composition comprising a poly(3,4-dihydro-3-substituted-1,3 benzoxazine) and a reactive polyamine, wherein the polyamine is at least difunctional and its reactive groups are primary or secondary amine, and wherein the poly(dihydrobenzoxazine) is the reaction product of about one equivalent of a primary amine, about one equivalent of a phenol and about two equivalents of formaldehyde.

PCT Patent Appl. Publ. No. WO 2008/095850 A1 (Setiabudi) reports a thermosetting composition comprising (a) 97.9 to 40 percent by weight of at least one bis(dihydrobenzoxazine) prepared by the reaction of an unsubstituted or substituted bisphenol with at least one unsubstituted position ortho to each hydroxyl group, formaldehyde and a primary amine; (b) 2 to 50 percent by weight of at least one organic polyamine; and (c) 0.1 to 10 percent by weight of at least one curing catalyst, selected from the group of carboxylic acids, sulfonic acids and phosphonic acids having at least two acid groups and no other reactive groups; wherein the percent by weight refer to the total amount of components (a), (b) and (c) in the composition, with the proviso that (a), (b) and (c) add up to 100 percent by weight; and (d) and optionally other components.

PCT Patent Appl. Publ. No. WO 2008/095837 A1 (Setiabudi) reports a thermosetting composition comprising (a) 97 to 40 percent by weight of at least one bis(dihydrobenzoxazine) prepared by the reaction of an unsubstituted or substituted bisphenol with at least one unsubstituted position ortho to each hydroxyl group, formaldehyde and a primary amine; and (b) 3 to 60 percent by weight of at least one bisphenol, wherein the percent by weight refer to the total amount of components (a) and (b), with the proviso that (a) and (b) add up to 100 percent by weight; and (c) optionally other components. Cured products made from these compositions are described to have valuable chemical, physical and mechanical properties.

PCT Patent Appl. Publ. No. WO 2011/025652 A1 (Gorodischer) reports a curable composition comprising a benzoxazine compound and a pentafluoroantimonic acid catalyst. The curable composition may be cured to produce cured compositions useful in coating, sealants, adhesive and many other applications.

### SUMMARY

In one aspect the present disclosure provides a curable composition as defined in appended claims 1-5 and its reaction product as defined in appended claim 6.

In another aspect, the present disclosure provides a method as defined in appended claims 7-11, the method comprising at least partially curing a curable composition according to the present disclosure.

In yet another aspect, the present disclosure provides an article as defined in appended claim 12 comprising a curable composition according to the present disclosure disposed on a releasable liner.

Advantageously, curable compositions including superacid catalyst according to the present disclosure can be effectively cured at lower temperatures than possible using previously disclosed acid catalysts.

The features and advantages of the present disclosure will be further understood upon consideration of the detailed description as well as the appended claims.

### BRIEF DESCRIPTION OF THE DRAWINGS

FIG. 1 is a schematic cross sectional view of an exemplary article 100 according to the present disclosure;
FIG. 2 is a plot showing heat flow versus temperature as measured by Differential Scanning Calorimetry for various curable compositions reported in the Examples; and
FIG. 3 is a plot showing heat flow versus temperature as measured by Differential Scanning Calorimetry for various curable compositions reported in the Examples.

It should be understood that numerous other modifications and embodiments can be devised by those skilled in the art, which fall within the scope and spirit of the principles of the disclosure. The figures may not be drawn to scale. Like reference numbers may have been used throughout the figures to denote like parts.

### DETAILED DESCRIPTION

As used herein, the term "heteroalkyl" refers to alkyl wherein one or more heteroatoms independently selected from S, O, and N are substituted for carbon. Examples include, methoxy, ethoxy, propoxy, 3,6-dioxaheptyl, and 4-dimethylaminobutyl.

As used herein, the term "heteroaryl" refers to aryl wherein one or more heteroatoms independently selected from S, O, and N are substituted for carbon. Examples include pyridyl, furanyl, pyrrolyl, thienyl, thiazolyl, oxazolyl, imidazolyl, indolyl, benzofuranyl, and benzthiazolyl.

As used herein, the term "hydrocarbyl" refers to a hydrocarbon wherein one hydrogen atom has been removed. Examples include phenyl, butyl, methyl, dodecyl, behenyl, ethyl phenyl, and diphenylmethyl.

As used herein, the term "heterohydrocarbyl" refers to hydrocarbyl wherein one or more heteroatoms independently selected from S, O, and N are substituted for carbon. Examples include methoxy, ethoxy, propoxy, 4-diphenylaminobutyl, 2-(2'-phenoxyethoxy)ethyl, 3,6-dioxaheptyl, and 3,6-dioxahexyl-6-phenyl.

Curable compositions according to the present disclosure include at least one 3-aryl benzoxazine. 3-Aryl benzoxazines are typically prepared by the condensation of a phenol, a primary arylamine, and an aliphatic aldehyde (typically formaldehyde); for example, according to long-established methods, although other aldehydes (e.g., alicyclic aldehydes or alkaryl aldehydes) may also be used.

3-Substituted benzoxazines may have additional substituents.

If difunctional arylamines (i.e., amines with two aminoaryl groups) are used, then compounds having two benzoxazine moieties are obtained; for example, as shown below wherein Z represents a divalent organic group having from 1 to 50 carbon atoms, and wherein Z is bonded to adjacent N atoms through aromatic carbon atom to nitrogen atom bonds.

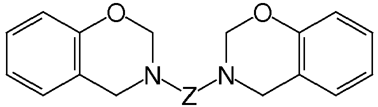

According to the present invention, 3-substituted benzoxazines are represented by the following formulas.

Useful commercially available 3-substituted benzoxazines include those available under the trade designation ARALDITE MT from Huntsman Corp. LLC (Salt Lake City, Utah). Examples include: 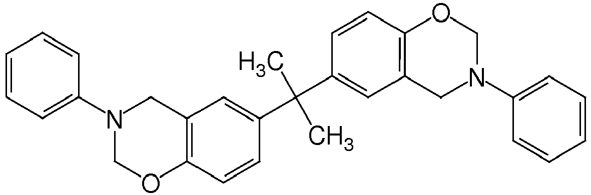 which is available as ARALDITE MT 35600; 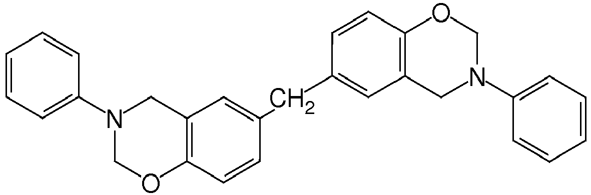 which is available as ARALDITE MT 35700; 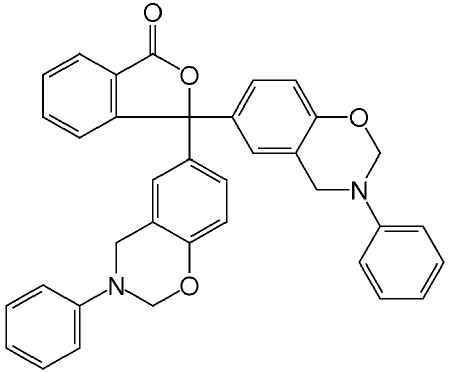 which is available as ARALDITE MT 35800; 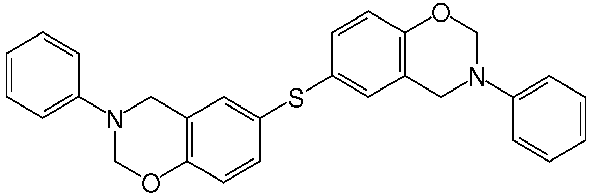 which is available as ARALDITE MT 35900; and 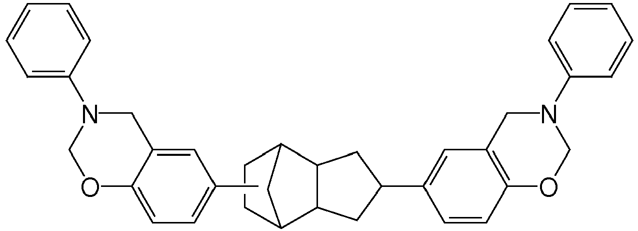 which is available as ARALDITE MT 36000.

Additional commercially available 3-substituted benzoxazines include 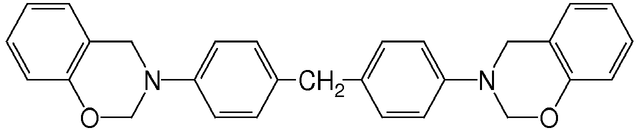 which is available as P-D BENZOXAZINE from Shikoku Chemicals Corporation (Kagawa, Japan).

Similarly, if compounds with greater inclusion of 3-substituted benzoxazine moieties are desired, then polyarylamines (i.e., having two or more arylamino groups) can be used. Alternatively, polyphenols such as, for example, bisphenol A or bisphenol F can be combined with monoamines and formaldehyde to make compounds with more than one 3-substituted benzoxazine group. If desired, oligomeric and/or polymeric benzoxazine resins can be made using polyphenols in combination with polyarylamines and formaldehyde. For further details concerning synthesis of 3-substituted benzoxazines (including resins) see, for example, U.S. Patent Nos. 4,501,864 (Higginbottom), 5,543,516 (Ishida), 7,041,772 (Aizawa et al.) and references contained therein. Other methods are described by N. N. Ghosh et al. in "Polybenzoxazine-new high performance thermosetting resins: synthesis and properties", Prog. Polym. Sci. (2007), vol. 32, pp. 1344-1391.

Generally, mono- and polyphenols may be used for the synthesis of 3-substituted benzoxazines. The phenol may be further substituted without limitation is desired. For example, the phenol may be substituted with substituents such as alkyl, cycloalkyl, heterocycloalkyl, aryl, heteroaryl, aralkyl, heteroaralkyl, alkoxy, alkoxyalkylene, hydroxyalkyl, hydroxyl, haloalkyl, carboxyl, halo, amino, aminoalkyl, alkylcarbonyloxy, alkyloxycarbonyl, alkylcarbonyl, alkylcarbonylamino, aminocarbonyl, alkylsulfonylamino, aminosulfonyl, sulfo, or alkylsulfonyl groups. Desirably, at least one of the ring positions adjacent to the phenolic hydroxyl group is unsubstituted to facilitate benzoxazine ring formation.

The aryl portion of the phenol may be a phenyl ring, or may be selected from naphthyl, biphenyl, phenanthryl, and anthracenyl. The aryl ring of the phenol may further comprise a heteroaryl ring containing 1-3 heteroatoms such as nitrogen, oxygen, or sulfur and can contain fused rings. Some examples of heteroaryl are pyridyl, furanyl, pyrrolyl, thienyl, thiazolyl, oxazolyl, imidazolyl, indolyl, benzofuranyl, and benzthiazolyl.

Examples or mono-functional phenols include phenol, cresol, 2-bromo-4-methylphenol, 2-allyphenol, and 4-aminophenol. Examples of polyphenols include phenolphthalein; biphenol; bisphenol F; 4,4'-dihydroxybenzophenone; bisphenol A; 1,8-dihydroxyanthraquinone; 1,6-dihydroxynaphthalene; 2,2'-dihydroxyazobenzene; resorcinol; fluorine bisphenol; and 1,3,5-trihydroxybenzene. Combinations of phenols may be used.

Aldehydes suitable for preparing 3-substituted benzoxazines include, for example, formaldehyde, paraformaldehyde, 1,3,5-trioxane, and aliphatic aldehydes (e.g., aliphatic aldehydes having from 1 to 12 carbon atoms). Examples of aliphatic aldehydes include crotonaldehyde, acetaldehyde, propionaldehyde, butyraldehyde, and heptaldehyde. Combinations of aldehydes may be used.

Amines useful in preparing 3-substituted benzoxazines are primary arylamines. They can be substituted or unsubstituted, mono- or poly-functional (with respect to arylamino groups) (hetero)hydrocarbylarylamines having at least one primary amino group (i.e., -NH₂) bonded to an aromatic carbon atom (i.e., a carbon atom in an aromatic ring). Generally, primary amino groups that are not bonded to an aromatic carbon atom are undesirable substituents in amines used to prepare 3-substituted benzoxazines and should be excluded as they may interfere with synthesis and/or stability of the benzoxazine; however, they may be tolerable in some cases (e.g., sterically hindered primary arylamines). The primary arylamines can be substituted with groups such as, for example, alkyl, cycloalkyl, heterocycloalkyl, aryl, heteroaryl, aralkyl, or heteroaralkyl. Combinations of primary arylamines may also be used.

Useful arylamines include, for example, aniline, 4-methoxyaniline, and 4-methylaniline. The term "poly(arylamine)" refers to organic compounds containing at least two primary amine groups directly that are bonded to respective aromatic carbon atoms. Examples of useful poly(arylamines) include 4,4'-methylenedianiline, 4,4'diaminobenzophenone, bis(4-aminophenyl)sulfone, 1, 3-diaminobenzene, and 1,4-diaminobenzene.

Curable compositions according to the present disclosure include at least one primary amine represented by the formula

Z¹⁅NH₂]ₙ

wherein Z¹ is an n-valent organic radical. Each of the -NH₂ groups is bonded to a tetracoordinate carbon atom, wherein n is an integer greater than or equal to 1, and wherein w/x is in a range of from 0.8 to 10.

Useful monoamines include, for example, methyl-, ethylamine, propylamine, hexylamine, octylamine, dodecylamine, dimethylamine, methyl ethyl amine, and aniline. The terms "diamine" and "polyamine," refer to organic compounds containing two or at least two primary amine groups, respectively. Examples of useful polyamines include 3,9-bis-(3-aminopropyl)-2,4,8,10-tetraoxaspiro[5,5]undecane, andpolyoxyethylenediamine, *N*-methyl-1,3-propanediamine, *N*-ethyl-1,2-ethanediamine, 2-(2-aminoethylamino)ethanol, pentaethylenehexaamine, ethylenediamine, hexamethylenediamine, dodecanediamine, *N*-methylethanolamine, 1,3-propanediamine, H₂N(CH₂CH₂NH)₁₋₁₀H, H₂N(CH₂CH₂CH₂CH₂NH)₁₋₁₀H, H₂N(CH₂CH₂CH₂CH₂CH₂CH₂NH)₁₋₁₀H, H₂N(CH₂)₃NHCH₂CH=CHCH₂NH(CH₂)₃NH₂, H₂N(CH₂)₄NH(CH₂)₃NH₂, H₂N(CH2)₃NH(CH₂)₄NH(CH₂)₃NH₂, H₂N(CH₂)₃NH(CH₂)2NH(CH₂)₃NH₂, H₂N(CH₂)₂NH(CH₂)₃NH(CH₂)₂NH₂, H₂N(CH₂)₃NH(CH₂)₂NH₂, and linear or branched (including dendrimers) homopolymers and copolymers of ethyleneimine (i.e., aziridine).

Useful polyamines also include poly(alkyleneoxy)polyamines such as, for example, H₂N-R¹⁰-O-(R¹¹O)ₚ-(R¹²O)_{q}-(R¹¹O)ᵣ -R¹⁰-NH₂ and [H₂N-R¹⁰ O-(R¹¹O)ₚ-]ₛ -R¹³.

R¹⁰, R¹¹ and R¹² are independently alkylene groups having from 1 to 10 carbon atoms. For example, R¹⁰ may be an alkyl group having 2 to 4 carbon atoms (e.g., ethyl, n-propyl, isopropyl, n-butyl, or isobutyl), and R⁷ and R⁸ may be alkyl groups having 2 or 3 carbon atoms (e.g., ethyl, n-propyl, or isopropyl). R⁹ is the residue of a polyol used to prepare the poly(alkyleneoxy)polyamines (i.e., the organic structure that remains if the hydroxyl groups are removed). R¹³ may be branched or linear, and substituted or unsubstituted (although substituents should not interfere with oxyalkylation reactions). The quantity p represents a number greater than or equal to 1, desirably from 1 to 150, or even from 1 to 20. Structures in which p is 2, 3 or 4 may also be especially useful. The quantities q and r represent numbers greater than or equal to zero. The quantity s is greater than two 2, desirably 3 or 4 (so as to provide, respectively, polyoxyalkylene triamines and tetraamines). In some embodiments, p, q, r and s are chosen such that the resulting product is a liquid at room temperature as this simplifies handling and mixing thereof. Usually, poly(alkyleneoxy)polyamines are liquid.

Examples of poly(alkyleneoxy)polyamines include poly(ethylene oxide) diamine, poly(propylene oxide)diamine, poly(propylene oxide)triamine, diethylene glycol propylene diamine, triethylene glycol propylene diamine, poly(tetramethyleneoxide)diamine, poly(ethylene oxide)-co-poly(propylene oxide)diamine, and poly(ethylene oxide)-co-poly(propylene oxide) triamine.

Examples of suitable commercially available poly(alkyleneoxy)polyamines include those available under the trade designation JEFFAMINE from Huntsman Chemical Company (Salt Lake City Utah) such as the JEFFAMINE D, ED, and EDR series diamines (e.g., D-400, D-2000, D-5000, ED-600, ED-900, ED-2001, and EDR-148), and the JEFFAMINE T series triamines (e.g., T-403), as well as a poly(alkyleneoxy)polyamine available as H221 from Union Carbide Company (Danbury, Connecticut).

Useful polyamines also include, for example, amine-terminated oligo- and poly- (diaryl)siloxanes and (dialkyl)siloxanes, amino-terminated polyethylenes or polypropylenes, and amino terminated poly(alkylene oxides). Useful polyamines also include polydialkylsiloxanes with pendent or terminal amino groups. Exemplary commercial polydialkylsiloxanes having terminal or pendent amine groups include those available as: PDMS DIAMINE 5k, 10k, or 15k from 3M Company (Saint Paul, Minnesota); TEGOMER A-Si 2120 or 2130 from Th. Goldschmidt (Essen, Germany); DMS-A11, A12, A15, A25, or A32, AMS-132, 152, 162, or 232, or ATM-1112 from Gelest, Inc. (Morrisville, Pennsylvania); or RHODORSIL 21643 and 21644, 21642, or 21637 from Rhodia SA (Courbevoie, France).

The benzoxazine and polyamine are combined in a respective equivalent ratio (w/x) in a range of from 0.8 to 10. In some embodiments, the ratio may be in a range of from 0.8 to 5, 0.8 to 4, or even 0.8 to 2, inclusive.

Curable compositions according to the present disclosure include a superacid. Superacids are, by definition, Brønsted acids that are more acidic than 100 percent sulfuric acid. Examples include salts of a substituted pentafluoroantimonic acid having the formula
H⁺[SbF₅X]⁻ wherein X is halogen, hydroxy, or -OR¹⁴ wherein foregoing formula is a residue of an aliphatic, alicyclic, or aromatic alcohol having a molecular weight less than about 10,000 grams/mole and a primary or secondary hydroxy functionality of at least 1, desirably at least 2. Catalysts of this are described in U.S. Patent No. 5,280,067 (Tarbutton et al.).
Examples of R¹⁴ include 2-hydroxyethoxy and 2-(2'-hydroxyethoxy)ethoxy. Examples of commercially available superacids include trifluoromethanesulfonic acid, and those available as NACURE SUPER XC-7231 and NACURE SUPER XC-A230, both from King Industries (Norwalk, Connecticut).

The superacid is generally present in an amount effective to affect the cure rate of the curable composition (i.e., an effective amount). Typically, such an effective amount is less than about 10 percent by weight, more typically less than about 5 percent by weight, or even less than about 1 percent by weight, based on the total weight of the curable composition.

Curable compositions according to the present disclosure can generally be prepared by simply combining the components thereof with mixing. In some cases, it may be desirable to warm one or more of the components (e.g., to melt a solid component) prior to combining.

Curing of the curable composition is typically accomplished by heating using a heat source. Examples of suitable heat sources include ovens, hot platens, and infrared radiation.

In some embodiments, the present disclosure provides B-stage compositions (e.g., as adhesive sheets or tapes). Processing applications such as printed circuit manufacture often employ stageable adhesives (i.e., adhesive compositions which can be partially cured to a tacky or tack-free state, disposed on a substrate, and cured - typically using heat and/or pressure). The partially-cured, tack-free state is commonly referred to as the "B-stage".

The physical properties (e.g., viscosity, tack, peel, shear) of uncured, B-stage, and cured compositions can be readily altered through the use of different amounts and types of each component in the curable composition.

Conditions for curing the curable composition depend on the reactants and amounts used and can be determined by those skilled in the art. The curable compositions may generally be made by mixing in any order the benzoxazine compound(s), arylamine, and superacid. Generally, the curable composition is then heated to a sufficient temperature (e.g., between about 50°C and 200°C) for a time of about 1-120 minutes, although other conditions may also be used.

Suitable heat sources include, for example induction heating coils, ovens, hot plates, heat guns, infrared sources including lasers, microwave sources.

Solvent can be used to assist in preparation and/or coating of the curable composition, and as a processing aid. For example, it may be advantageous to prepare a concentrated solution of the catalyst in a small amount of solvent to simplify the preparation of the polymerizable composition. Exemplary solvents include lactones, such as gamma-butyrolactone, gamma-valerolactone; and epsilon-caprolactone; ketones such as acetone, methyl ethyl ketone, methyl isobutyl ketone, cyclopentanone and cyclohexanone; sulfones, such as tetramethylene sulfone, 3-methylsulfolane, 2,4-dimethylsulfolane, butadiene sulfone, methyl sulfone, ethyl sulfone, propyl sulfone, butyl sulfone, methyl vinyl sulfone, and 2,2'-sulfonyldiethanol; sulfoxides, such as dimethyl sulfoxide; cyclic carbonates such as propylene carbonate, ethylene carbonate, and vinylene carbonate; carboxylic acid esters such as ethyl acetate, methyl cellosolve acetate, methyl formate; methylene chloride, nitromethane, acetonitrile, glycol sulfite, and 1,2-dimethoxyethane (glyme).

Adjuvants may optionally be added to the curable composition. Examples include colorants, abrasive granules, anti-oxidant stabilizers, thermal degradation stabilizers, light stabilizers, conductive particles, tackifiers, fillers, flow agents, bodying agents, flatting agents, inert fillers, binders, blowing agents, fungicides, bactericides, surfactants, plasticizers, rubber tougheners and other additives known to those skilled in the art.

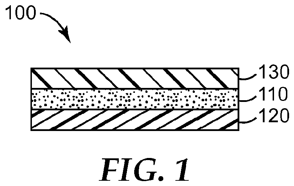

In some embodiments, curable compositions according to the present disclosure are disposed on a liner (e.g., if formed into a thermosetting sheet or tape). Referring now to FIG. 1, exemplary article 100 comprises a curable composition 110 according to the present disclosure disposed on first releasable liner 120. In some embodiments, curable composition 110 is sandwiched between first releasable liner 120 and optional first releasable liner 130.

Releasable liners are well-known in the art and include, for example, siliconized paper, and polyolefin films (e.g., polypropylene films). In order to make article 100, curable composition 110 may, for example, be coated onto, or laminated to one or both of the releasable liners.

Compositions according to the present disclosure are useful; for example, as coatings, foams, shaped articles, adhesives (including structural and semi-structural adhesives), magnetic media, filled or reinforced composites, coated abrasives, caulking and sealing compounds, casting and molding compounds, potting and encapsulating compounds, impregnating and coating compounds, conductive adhesives for electronics, protective coatings for electronics, and other applications that are known to those skilled in the art.

Objects and advantages of this disclosure are further illustrated by the following non-limiting examples, but the particular materials and amounts thereof recited in these examples, as well as other conditions and details, should not be construed to unduly limit this disclosure.

### EXAMPLES

Unless otherwise noted, all parts, percentages, ratios, etc. in the Examples and the rest of the specification are by weight.

### COMPARATIVE EXAMPLE 1 (CE1a, CE1b)

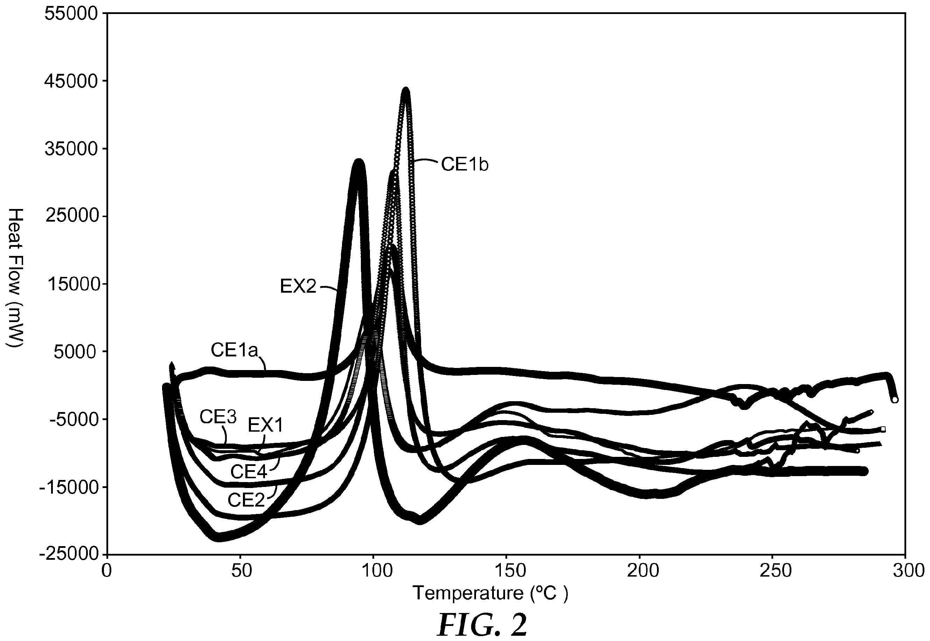

meta-Xylenediamine (0.68 g, 0.005 mol, obtained as MXDA from Mitsubishi Gas, Japan) and 2.31 g (0.005 mol) of finely powdered ARALDITE MT 35600 (Huntsman Corp. LLC, Salt Lake City, Utah), a Bisphenol A -based benzoxazine, were admixed and stirred at room temperature for several minutes until a uniform doughy mixture was obtained. An aliquot of the mixture was then placed into an open aluminum differential scanning calorimetry (DSC) pan and heated at 10°C/min from 25°C to 300°C in a Differential Scanning Calorimeter (Seiko Instruments USA, Inc., Torrance, California). The DSC trace was recorded and is labeled "CE1a" in FIG. 2. The entire procedure was repeated. The DSC trace of the replicate run is labeled "CE1b" in FIG. 2. The different size of the area under the peak in trace CElb as compared to trace CEla is a function of DSC testing variables, principally the specimen weight, which was not controlled. This is shown here to emphasize that the important factors, in comparing cure using the traces of FIG. 2, are the overall shape of the traces and the onset temperatures for peaks, which are roughly the same for traces CEla and CE1b.

### COMPARATIVE EXAMPLE 2 (CE2)

Taurine (0.10 g) was added to 0.68 g (0.005 mol) meta-xylenediamine (1,3-bis(aminomethyl)benzene, MXDA). This mixture and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C/min from 25°C to 300°C in a Differential Scanning Calorimeter (Seiko Instruments USA). The DSC trace was recorded and is labeled "CE2" in FIG. 2.

### COMPARATIVE EXAMPLE 3 (CE3)

Adipic acid (0.10 g) was added to 0.68 g (0.005 mol) meta-xylenediamine (MXDA). This mixture and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C /min from 25°C to 300°C in a Differential Scanning Calorimeter (Seiko Instruments USA ). The DSC trace was recorded and is labeled "CE3" in FIG. 2.

### COMPARATIVE EXAMPLE 4 (CE4)

Dibutyltin dilaurate (0.10 g) was added to 0.68 g (0.005 mol) meta-xylenediamine (MXDA). This mixture and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C/min from 25°C to 300°C in a Differential Scanning Calorimeter (Seiko Instruments USA). The DSC trace was recorded and is labeled "CE4" in FIG. 2.

### EXAMPLE 1

Diethylene glycol / antimony pentafluoride (DEG-SbF₅) adduct (0.10 g, prepared according to U.S. Patent No. 5,280,067 (Tarbutton et al.)), was added to 0.68 g (0.005 mol) meta-xylenediamine (MXDA). This mixture and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C/min from 25°C to 300°C in a Differential Scanning Calorimeter (Seiko Instruments USA). The DSC trace was recorded and is labeled "EX1" in FIG. 2.

### EXAMPLE 2

NACURE SUPER XC-7231 ammonium antimony hexafluoride catalyst (0.10 g, King Industries, Inc., Norwalk, Connecticut) was added to 0.68 g (0.005 mol) meta-xylenediamine (MXDA). This mixture and 2.31 grams (0.005 mol) of finely powdered ARALDITE MT 35600 Bisphenol-A based benzoxazine were admixed, and stirred at room temperature for several minutes until a uniform doughy mixture was obtained. An aliquot of the mixture was then placed into an open aluminum DSC pan and heated at 10°C/min from 25°C to 300°C in a Differential Scanning Calorimeter (Seiko Instruments USA). The DSC trace was recorded and is labeled "EX2" in FIG. 2.

FIG. 2 illustrates the acceleration effects various catalysts had on the MXDA amine cure of the Bisphenol-A based benzoxazine. Exotherm peak onset temperatures can be estimated by extrapolating the relatively linear portion of the leading edge of the peak down to a baseline connecting the minima on either side of the peak. The uncatalyzed examples, traces CEla and CE1b, both exhibited peak onsets around 97-98°C. Catalytic amounts of taurine (a sulfonic acid) or adipic acid (a carboxylic acid), represented respectively by traces CE2 and CE3, lowered the peak onset only slightly, to the 93-94°C range, so the catalytic effect on the cure was negligible. A catalytic amount of dibutyltin dilaurate, represented by trace CE4, lowered the peak onset to about 87°C, but much of the cure took place at much higher temperatures, in excess of 120°C. A broad exotherm was observed, having minor peaks at about 153°C and about 239°C. The amount of energy released during the lower temperature exotherm was found, by integration of the peak, to be 49 Joules/gram, while the broad higher temperature peak released over two and half times as much energy, 127 J/g of the curable composition.

However, when similar catalytic amounts of superacid catalysts were added, the peak was seen to be shifted to even lower temperature. A catalytic amount of DEG-SbF₅ adduct, represented by trace Ex.1, exhibited a peak onset shifted down to about 83-84°C, and the higher-temperature exotherms were much smaller than for trace CE4. A catalytic amount of NACURE SUPER XC-7231, represented by trace Ex.2, exhibited a peak onset shifted significantly, to only 77-78°C, and secondary curing events at higher temperatures were similarly suppressed.

Similar effects were observed when the same ARALDITE MT 35600 Bisphenol-A based benzoxazine was cured with JEFFAMINE D230 (Huntsman Corp., The Woodlands, Texas), a polyether diamine, using similar catalytic amounts of the same aforementioned accelerators.

### COMPARATIVE EXAMPLE 5 (CE5)

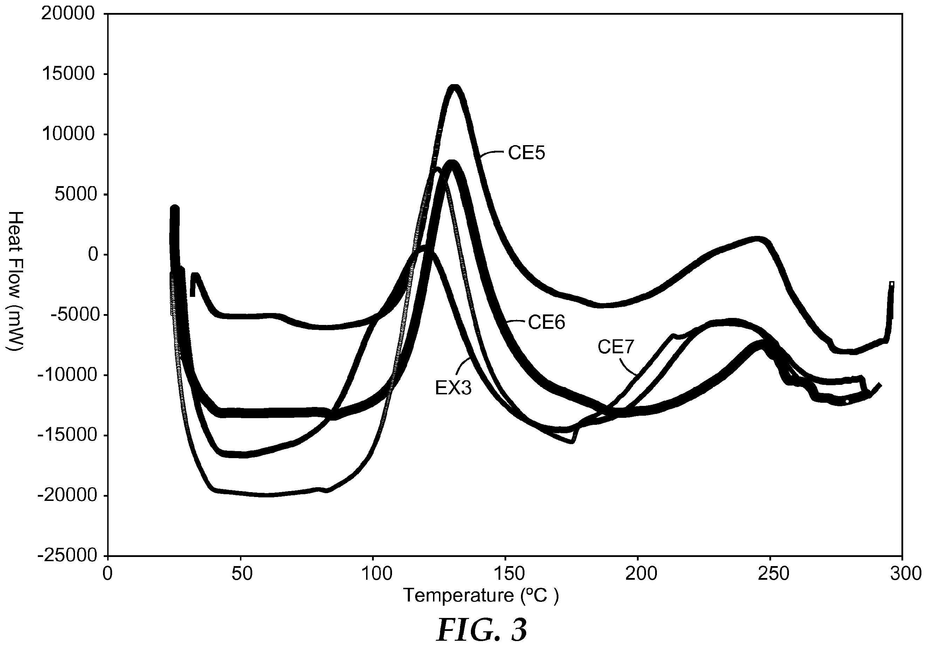

JEFFAMINE D230 polyamine (1.15 g, 0.005 mol, Huntsman Corp.) and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C/min from 25°C to 300°C in a Differential Scanning Calorimeter (Seiko Instruments USA). The DSC trace was recorded and is labeled "CE5" in FIG. 3.

### COMPARATIVE EXAMPLE 6 (CE6)

Taurine (0.10 g) was added to 1.15 g (0.005 mol) of JEFFAMINE D230 polyamine. This mixture and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C/min from 25°C to 300°C in a Differential Scanning Calorimeter (Seiko Instruments USA). The DSC trace was recorded and is labeled "CE6" in FIG. 3.

### COMPARATIVE EXAMPLE 7 (CE7)

Adipic acid (0.10 g) was added to 1.15 g (0.005 mol) JEFFAMINE D230 polyamine. This mixture and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C /min from 25°C to 300°C in a Differential Scanning Calorimeter (Seiko Instruments USA). The DSC trace was recorded and is labeled "CE7" in FIG. 3.

### EXAMPLE 3

NACURE SUPER XC-7231 catalyst (0.10 g), was added to 1.15 g (0.005 mol) JEFFAMINE D230. This mixture and 2.31 g (0.005 mol) of finely powdered ARALDITE MT 35600 Bisphenol-A based benzoxazine were admixed and stirred at room temperature for several minutes until a uniform doughy mixture was obtained. An aliquot of the mixture was then placed into an open aluminum DSC pan and heated at 10°C/min from 25°C to 300°C in a Differential Scanning Calorimeter (Seiko Instruments USA, Inc., Torrance, CA). The DSC trace was recorded and is labeled "EX3" in FIG. 3.

FIG. 3 illustrates the acceleration effects various catalysts had on the JEFFAMINE D230 cure of the Bisphenol-A based benzoxazine. Peak onset temperatures were estimated as outlined above. The uncatalyzed example, trace CE5, exhibited peak onset at about 111°C. Catalytic amounts of taurine (a sulfonic acid) or adipic acid (a carboxylic acid), represented respectively by traces CE6 and CE7, lowered the peak onset only slightly, to about 109°C and about 99°C, respectively, and the overall shapes of the traces were similar, so the catalytic effect on the cure was only slight.

However, when a similar catalytic amount of a superacid catalyst was added, the peak was seen to be shifted to even lower temperature. A catalytic amount of NACURE SUPER XC-7231, represented by trace Ex.3, exhibited a peak onset shifted significantly, to about 81°C. The overall shapes of the trace was similar to the others, with the exception of the low temperature curing peak exhibiting the apparent overlap of two peaks, implying a significant catalytic effect on the cure.

### Overlap Shear Strength Testing (OLS)

Overlap (or "lap") shear specimens were made using 10 cm x 18 cm x 0.160 cm (4" x 7" x 0.063") 7075 T6 bare aluminum that had been anodized according to Boeing Aircraft Company Specification BAC-5555. The anodization voltage was 22.5 volts. The specimen was generated as described in ASTM Specification D-1002.

The specific thermal coating conditions varied, as described below in each Example. Generally, a strip of approximately 1.3 cm (0.5") x 0.15 mm of adhesive was applied to one edge of each of the two adherends using a scraper. Three 75-µm (75 micron) diameter piano wires were used as spacers for bondline thickness control. The bond was closed and taped on the edge. The bond was placed between sheets of aluminum foil and pieces of cardboard. Two 14# steel plates were used to apply pressure to provide for adhesive spreading. After the adhesive had been allowed to cure (as described in each Example), the large specimen was cut into 2.5 cm (1") wide smaller specimens, providing a 3.2 cm² (0.5 in²) bonded area. Six lap shear specimens were obtained from each larger specimen. The bonds were tested to failure at room temperature on a SINTECH Tensile Testing machine (MTS, Eden Prairie, Minnesota), using a crosshead displacement rate of 0.25 cm/min (0.1"/min). The failure load was recorded. The lap width was measured with a vernier caliper. The quoted lap shear strengths are calculated as (2)·(failure load)/(measured width). The average (mean) and standard deviation were calculated from the results of six tests.

### FPL Etched and Phosphoric Acid Anodized Aluminum Substrate

The aluminum substrates for use in the procedure described below were treated as follows before bonding:
1) soaked for 10 minutes in OAKITE 165 caustic wash solution (Chemetall Americas, New Providence, New Jersey), at a temperature of 85°C;
2) the sheets (in a rack) were submerged in a tank of tap water for 10 minutes;
3) spray rinsed with tap water for 2-3 minutes;
4) soaked in a tank of FPL etch (Forest Products Laboratory, Madison, Wisconsin), a hot solution of sulfuric acid and sodium dichromate, at 66°C for 10 minutes;
5) spray rinsed with tap water for 2-3 minutes;
6) drip-dried for 10 minutes at ambient temperature and then for 30 minutes in a re-circulating air oven at 54°C.

In all cases, the panels were further treated as follows. The etched panels were anodized by immersion in phosphoric acid at 22°C. with an applied voltage of 15 Volts for 20-25 minutes, then rinsed with tap water (and tested for water break), air dried for 10 minutes at room temperature, then oven dried in a forced air oven at 66°C for 10 minutes. The resulting anodized aluminum panels were primed within 24 hours of treatment. The anodized panels were primed with a corrosion inhibiting primer for aluminum (3M SCOTCH-WELD Structural Adhesive Primer EW-5000, available from 3M Company) according to the manufacturer's instructions to give a dried primer thickness of between 2.6 to 5.2 micrometers (0.00010 and 0.00020 inches).

### Floating Roller Peel Strength Test for Adhesive Film (FRP)

Primed panels of 2024-T3 bare aluminum measuring 20.3 cm x 7.6 cm x 0.16 cm (8 inches x 3 inches x 0.063 inch), or 25.4 cm x 7.6 cm x 0.064 cm thick (10 inches x 3 inches x 0.025 inch)), were prepared for testing as described above. The primed panels were bonded together using the same film adhesive and cure cycle employed for the overlap shear samples, then evaluated for floating roller peel strength in accordance with test method ASTM D-3167-76 with the following modification. Test strips measuring 12.7 cm (0.5 inch) wide were cut along the lengthwise direction of the bonded aluminum panels. A tensile testing machine operated at a rate of 30.5 cm/minute (6 inches/minute) was used to peel the thinner substrate from the thicker one, and the results were normalized to a width of 2.5 cm (one inch).

### COMPARATIVE EXAMPLE 8 (CE8)

To 23.1 g (0.05 mol) of ARALDITE MT 35600 Bisphenol-A benzoxazine, heated to 100°C, was added a mixture of 6.8 g (0.05 mol) of MXDA and 4.5 g of PARALOID EXL-2600 (Dow Chemical Co, Midland, Michigan), a core-shell impact modifier (toughener). The components were stirred while hot. The reactive composition was deposited between two silicone coated PET liners and a 125 µm (125 micron) thick film of the reactive composition was made by pulling the sandwich construction through a "hot knife" at 100°C. The film was then used to prepare overlap shear (OLS) and floating roller peel (FRP) samples as described above. The samples were cured at 180°C for 2 hours. Overlap shear and floating roller peel tests were then performed as described above to obtain the data presented in Table 1.

### COMPARATIVE EXAMPLE 9 (CE9)

To 2 g of adipic acid dissolved in a few drops of propylene carbonate was added 6.8 g (0.05 mol) of MXDA and 4.5 grams of PARALOID EXL-2600 core-shell toughener. The mixture was stirred until uniform and added to 23.1 g (0.05 mol) of ARALDITE MT 35600 Bisphenol-A benzoxazine heated to 100°C. The components were stirred while hot. The reactive composition was deposited between two silicone coated PET liners and a 125 µm (125 micron) thick film of the reactive composition was made by pulling the sandwich construction through a "hot knife" at 100°C. The film was then used to prepare overlap shear (OLS) and floating roller peel (FRP) samples as described above. The samples were cured at 180°C for 2 hours. Overlap shear and floating roller peel tests were then performed as described above to obtain the data presented in Table 1.

### EXAMPLE 4

To 1 g of NACURE SUPER XC-7231 dissolved in a few drops of propylene carbonate was added 6.8 g (0.05 mol) of MXDA and 4.5 g of PARALOID EXL-2600 core-shell toughener. The mixture was stirred until uniform and added to 23.1 g (0.05 mol) of ARALDITE MT 35600 Bisphenol-A benzoxazine heated to 100°C. The components were stirred while hot. The reactive composition was deposited between two silicone coated PET liners and a 125 µm (125 micron) thick film of the reactive composition was made by pulling the sandwich construction through a "hot knife" at 100°C. The film was then used to prepare overlap shear (OLS) and floating roller peel (FRP) samples as described above. The samples were cured at 180°C for 2 hours. Overlap shear and floating roller peel tests were then performed as described above to obtain the data presented in Table 1.

**TABLE 1**

| EXAMPLE NUMBER | CATALYST | OLS, lb/in² (MPa) | | | FRP, lb/inch (N/cm) | | |
|---|---|---|---|---|---|---|---|
| | | Mean | Max | Std. Dev. | Mean | Max | Std. Dev. |
| CE8 | None | 980 | 1912 | 568 | 3.0 | 3.2 | 0.3 |
| | | (6.76) | (13.18 ) | (3.92 ) | (0.46) | (5.60) | (0.53) |
| CE9 | Adipic Acid | 1896 | 1963 | 75 | 2.86 | 4.85 | 1.0 |
| | | (13.07) | (13.53 ) | (0.52 ) | (5.01) | (8.49) | (1.75) |
| 4 | NACURE SUPER XC-7231 | 2399 | 2772 | 268 | 2.15 | 2.63 | 0.33 |
| | | (16.54) | (19.11 ) | (1.85 ) | (3.77) | (4.61) | (0.58) |

The results indicate that while neither superacid nor carboxylic acid catalysis had much effect on the peel bond strength, the overlap shear strength increased nearly two-fold for the carboxylic acid catalyst and significantly more for the superacid catalyzed cure. The superacid catalyzed specimen's performance improvement was coupled with faster, lower temperature cure, as demonstrated by the DSC results show in the previous Examples.

### EXAMPLE 5 (comparative)

To 115.50 g (0.25 mol) of molten ARALDITE MT 35600 Bisphenol-A benzoxazine at 80C, 57.5g (0.25 mol) of JEFFAMINE D230, also heated to 80°C, was added. The solution was stirred until uniform and then deposited into a mold according to ASTM D2566. The mold was then placed into an oven at 180°C for two hours. The sample was then allowed to cool to room temperature, and the sample removed and measured with a caliper to show virtually zero shrinkage.

## Claims

1. A curable composition comprising:
w equivalents of at least one benzoxazine represented by the formula 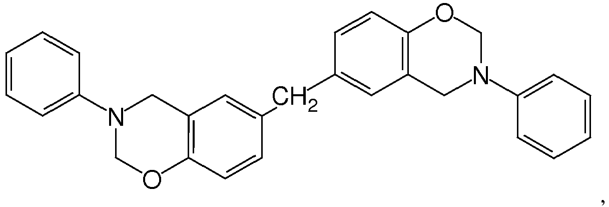 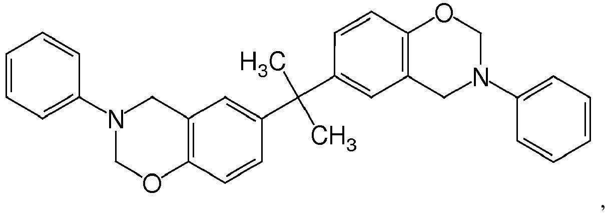 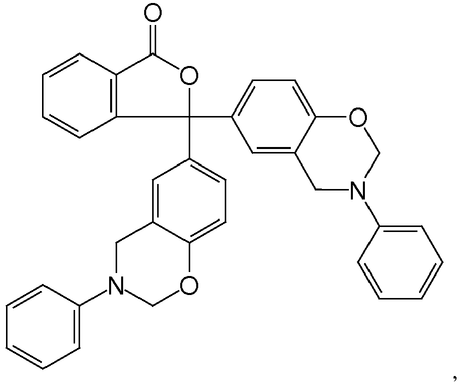 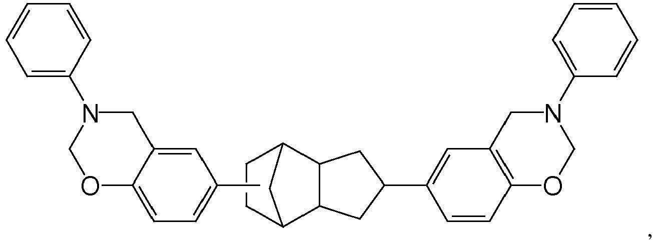 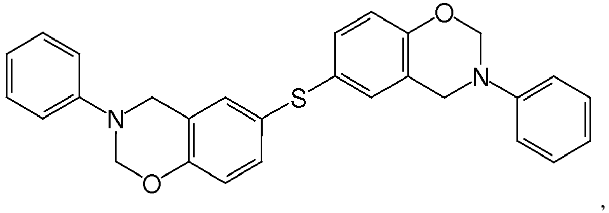 or 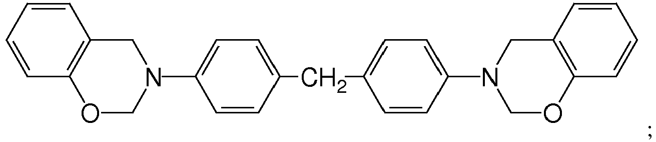
x equivalents of at least one primary amine represented by the formula
Z¹⁅NH₂]ₙ
wherein Z¹ is an n-valent organic radical, wherein each of the -NH₂ groups is bonded to a tetracoordinate carbon atom, wherein n is an integer greater than or equal to 1, and wherein w/x is in a range of from 0.8 to 10; and
a superacid.

2. A curable composition according to claim 1, wherein w/x is in a range of from 0.8 to 4, inclusive.

3. A curable composition according to claim 1 or 2, wherein the superacid comprises antimony.

4. A curable composition according to any one of claims 1 to 3, wherein Z¹ is selected from the group consisting of hydrocarbylene groups having from 2 to 50 carbon atoms, and heterohydrocarbylene groups having from 4 to 50 carbon atoms.

5. A curable composition according to any one of claims 1 to 4, wherein the composition is B-staged.

6. A reaction product of components comprising:
w equivalents of at least one benzoxazine represented by the formula 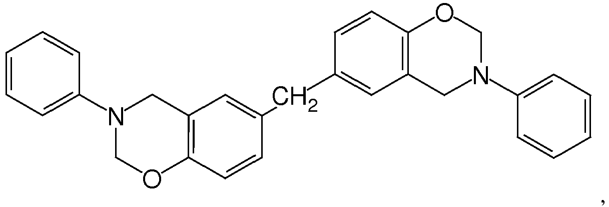 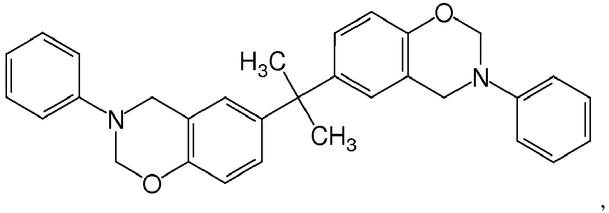 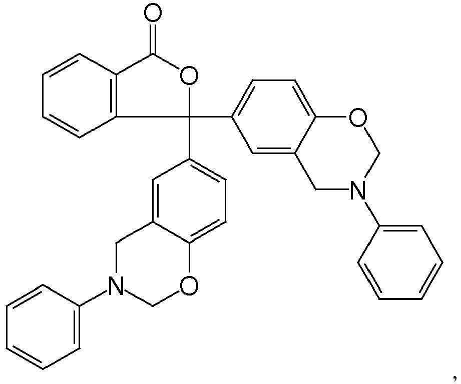 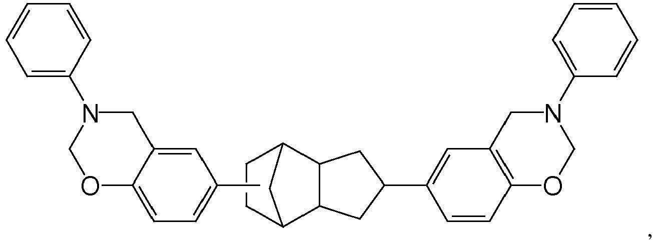 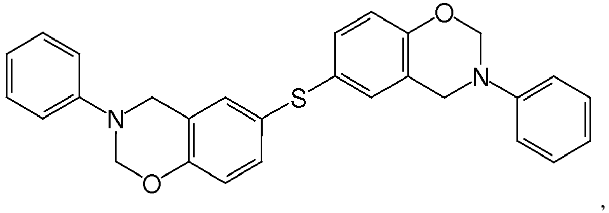 or 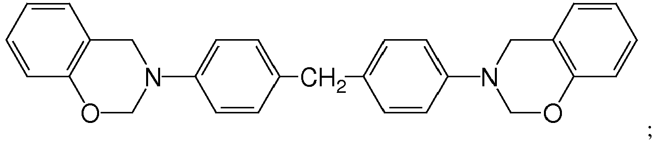
x equivalents of at least one primary amine represented by the formula
Z¹⁅NH₂]ₙ
wherein Z¹ is an n-valent organic radical, wherein each of the -NH₂ groups is bonded to a tetracoordinate carbon atom, wherein n is an integer greater than or equal to 1, and wherein w/x is in a range of from 0.8 to 10; and
a superacid.

7. A method comprising at least partially curing a curable composition, wherein the curable composition comprises:
w equivalents of at least one benzoxazine represented by the formula 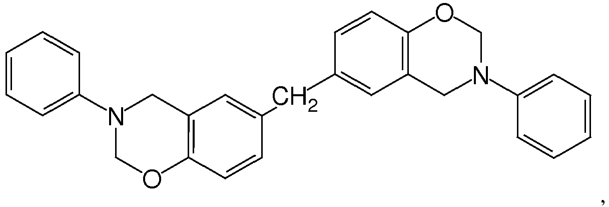 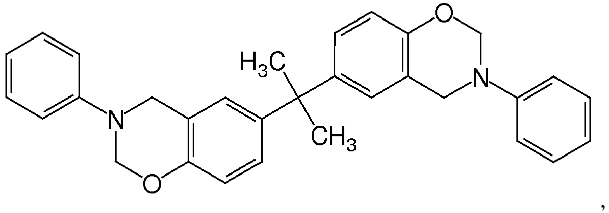 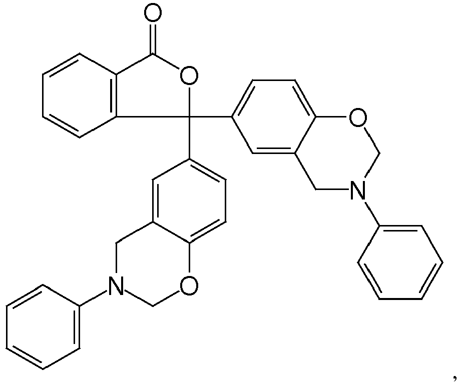 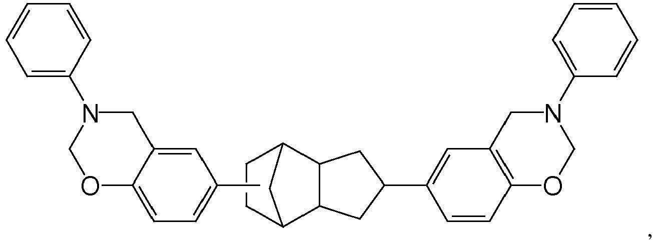 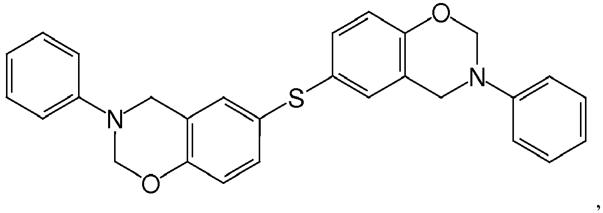 or 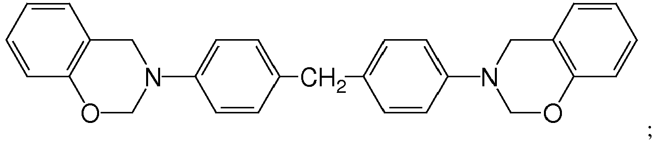
x equivalents of at least one primary amine represented by the formula
Z¹⁅NH₂]ₙ
wherein Z¹ is an n-valent organic radical, wherein each of the -NH₂ groups is bonded to a tetracoordinate carbon atom, wherein n is an integer greater than or equal to 1, and wherein w/x is in a range of from 0.8 to 10; and
a superacid.

8. A method according to claim 7, wherein w/x is in a range of from 0.8 to 4, inclusive.

9. A method according to claim 7 or 8, wherein the superacid comprises antimony.

10. A method according to any one of claims 7 to 9, wherein Z¹ is selected from the group consisting of hydrocarbylene groups having from 2 to 50 carbon atoms, and heterohydrocarbylene groups having from 4 to 50 carbon atoms.

11. A method according to any one of claims 7 to 10, wherein the composition is B-staged.

12. An article comprising a curable composition disposed on a first releasable liner, wherein the curable composition comprises
w equivalents of at least one benzoxazine represented by the formula 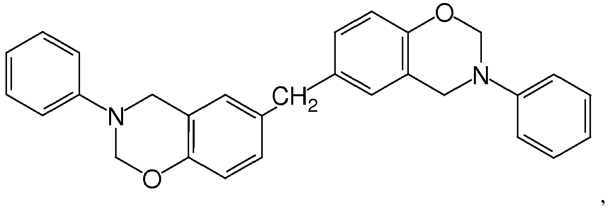 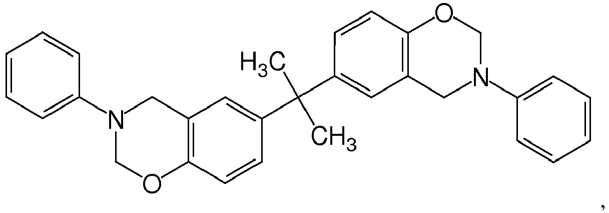 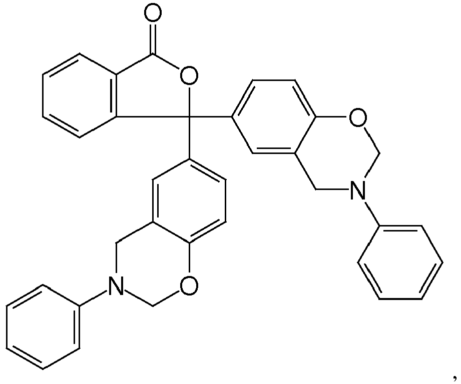 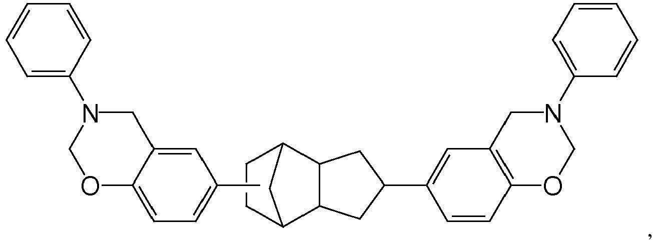 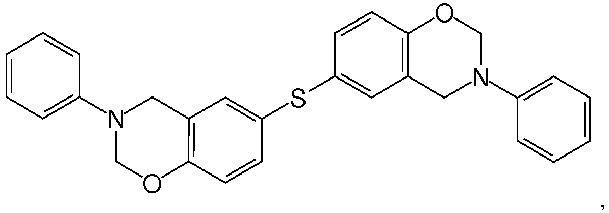 or Ltr t 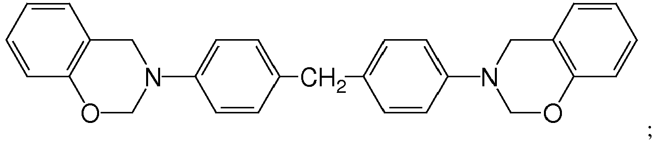 x equivalents of at least one primary amine represented by the formula
Z¹⁅NH₂]ₙ
wherein Z¹ is an n-valent organic radical, wherein each of the -NH₂ groups is bonded to a tetracoordinate carbon atom, wherein n is an integer greater than or equal to 1, and wherein w/x is in a range of from 0.8 to 10; and
a superacid.

## Patentansprüche

1. Härtbare Zusammensetzung, umfassend:
w Äquivalente von mindestens einem Benzoxazin, dargestellt durch die folgende Formel 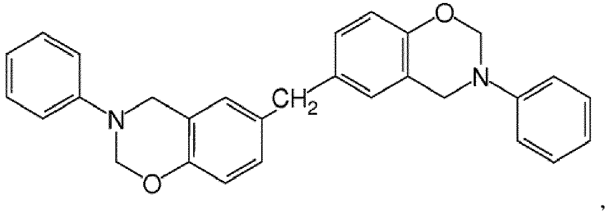 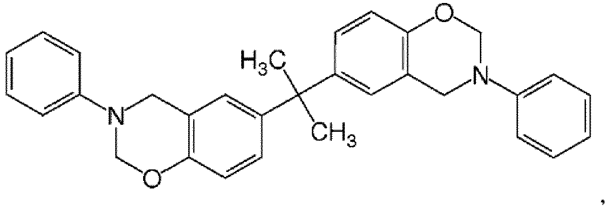 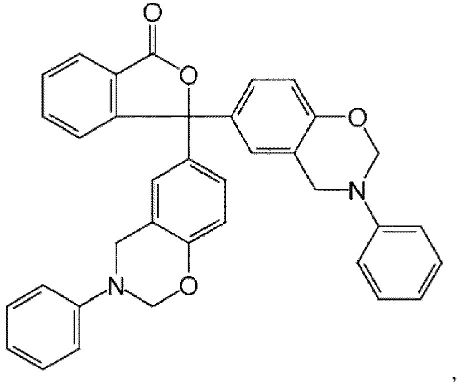 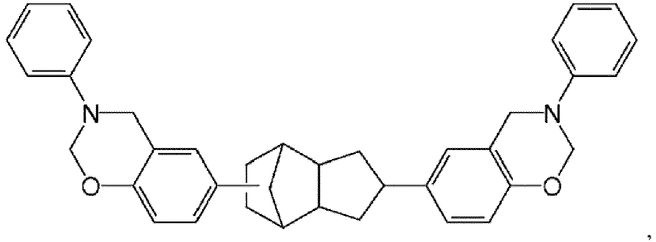 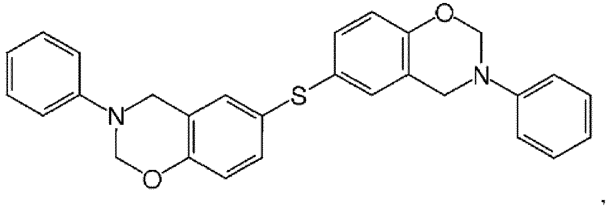 oder 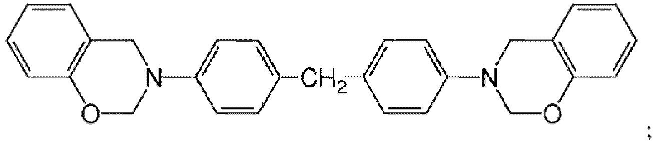
x Äquivalente von mindestens einem Primäramin, dargestellt durch die folgende Formel
Z¹⁅NH₂]ₙ
worin Z¹ ein n-valentes, organisches Radikal ist, wobei jede der -NH₂-Gruppen an ein Tetrakoordinatkohlenstoffatom gebunden ist, wobei n eine ganze Zahl ist, die größer oder gleich 1 ist, und wobei w/x in einem Bereich liegt, der von 0,8 bis 10 beträgt; und
eine Supersäure.

2. Härtbare Zusammensetzung nach Anspruch 1, wobei w/x in einem Bereich von einschließlich 0,8 bis einschließlich 4 liegt.

3. Härtbare Zusammensetzung nach Anspruch 1 oder 2, wobei die Supersäure Antimon umfasst.

4. Härtbare Zusammensetzung nach einem der Ansprüche 1 bis 3, wobei Z¹ ausgewählt ist aus der Gruppe bestehend aus Hydrocarbylengruppen mit 2 bis 50 Kohlenstoffatomen, und Heterohydrocarbylengruppen mit 4 bis 50 Kohlenstoffatomen.

5. Härtbare Zusammensetzung nach einem der Ansprüche 1 bis 4, wobei die Zusammensetzung im B-Zustand ist.

6. Reaktionsprodukt von Komponenten, die Folgendes umfassen:
w Äquivalente von mindestens einem Benzoxazin, dargestellt durch die folgende Formel 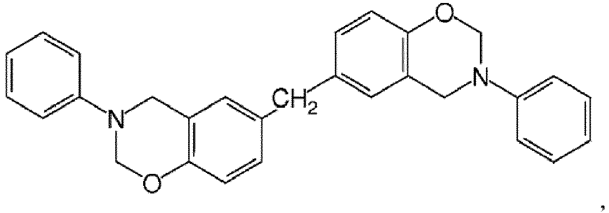 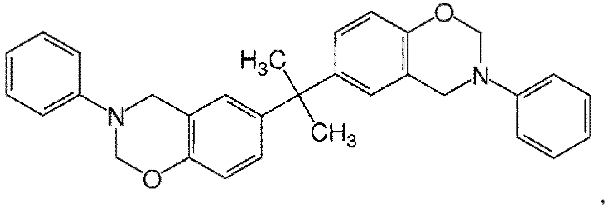 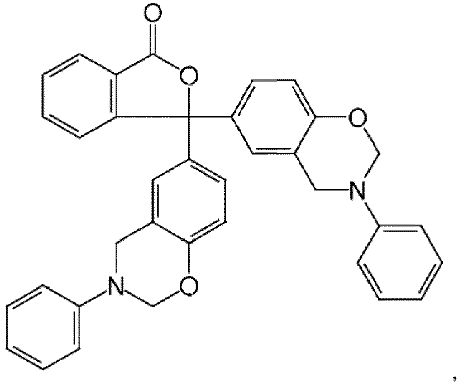 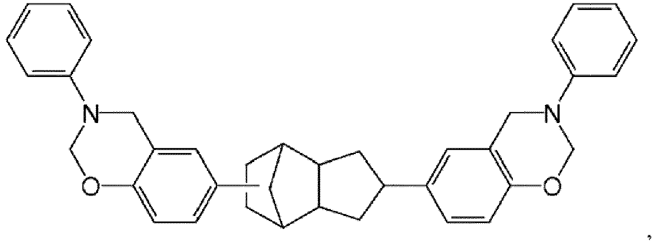 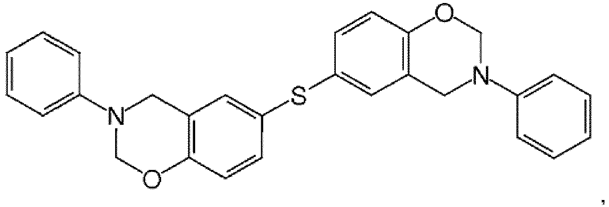 oder 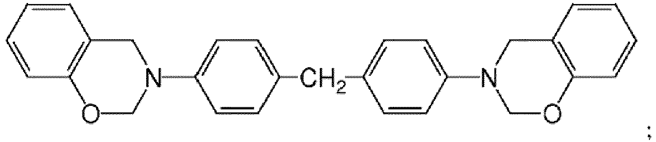
x Äquivalente von mindestens einem Primäramin, dargestellt durch die folgende Formel
Z¹⁅NH₂]ₙ
worin Z¹ ein n-valentes, organisches Radikal ist, wobei jede der -NH₂-Gruppen an ein Tetrakoordinatkohlenstoffatom gebunden ist, wobei n eine ganze Zahl ist, die größer oder gleich 1 ist, und wobei w/x in einem Bereich liegt, der von 0,8 bis 10 beträgt; und
eine Supersäure.

7. Verfahren, umfassend das mindestens teilweise Härten der härtbaren Zusammensetzung, wobei die härtbare Zusammensetzung Folgendes umfasst:
w Äquivalente von mindestens einem Benzoxazin, dargestellt durch die folgende Formel 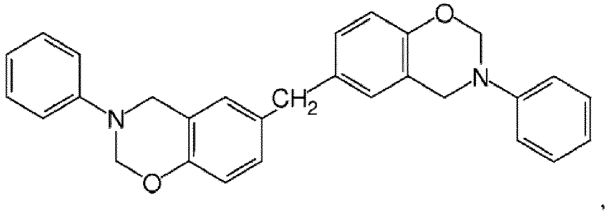 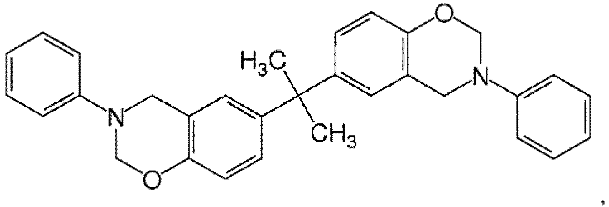 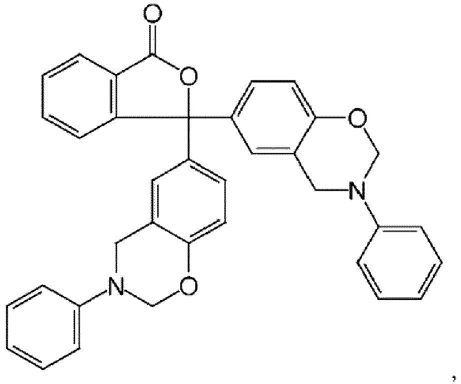 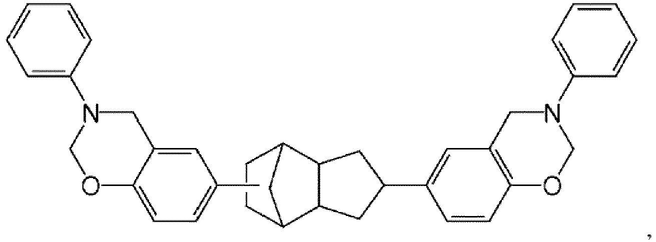 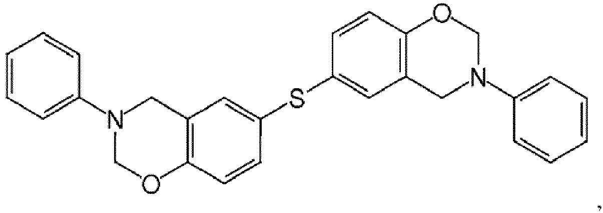 oder 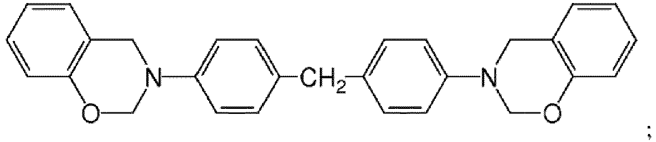
x Äquivalente von mindestens einem Primäramin, dargestellt durch die folgende Formel
Z¹⁅NH₂]ₙ
worin Z¹ ein n-valentes, organisches Radikal ist, wobei jede der -NH₂-Gruppen an ein Tetrakoordinatkohlenstoffatom gebunden ist, wobei n eine ganze Zahl ist, die größer oder gleich 1 ist, und wobei w/x in einem Bereich liegt, der von 0,8 bis 10 beträgt; und
eine Supersäure.

8. Verfahren nach Anspruch 7, wobei w/x in einem Bereich von einschließlich 0,8 bis einschließlich 4 liegt.

9. Verfahren nach Anspruch 7 oder 8, wobei die Supersäure Antimon umfasst.

10. Verfahren nach einem der Ansprüche 7 bis 9, wobei Z¹ ausgewählt ist aus der Gruppe bestehend aus Hydrocarbylengruppen mit 2 bis 50 Kohlenstoffatomen, und Heterohydrocarbylengruppen mit 4 bis 50 Kohlenstoffatomen.

11. Verfahren nach einem der Ansprüche 7 bis 10, wobei die Zusammensetzung im B-Zustand ist.

12. Artikel, umfassend eine härtbare Zusammensetzung, die auf einer ersten lösbaren Auskleidung angebracht ist, wobei die härtbare Zusammensetzung Folgendes umfasst
w Äquivalente von mindestens einem Benzoxazin, dargestellt durch die folgende Formel 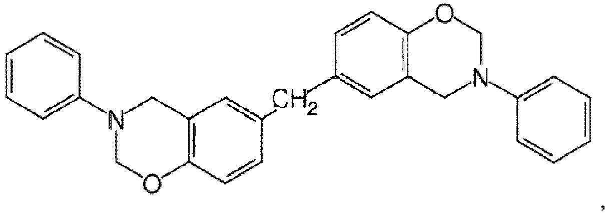 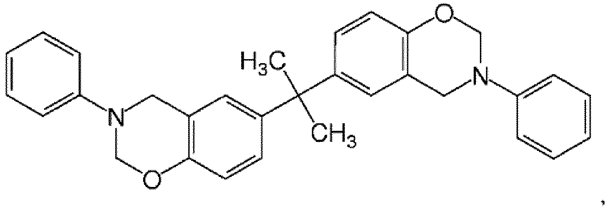 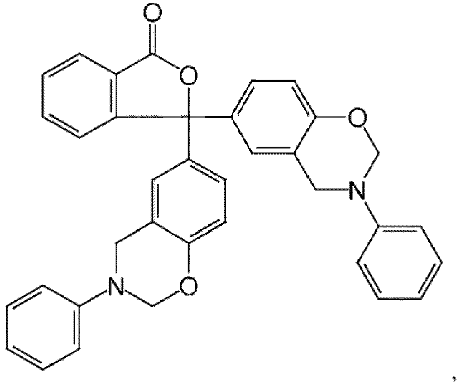 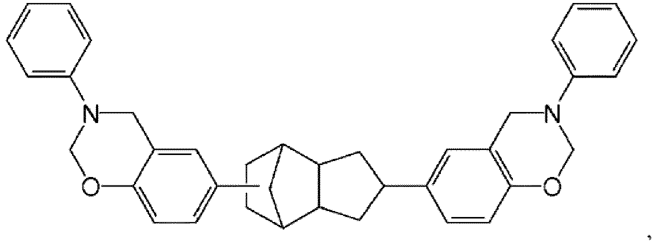 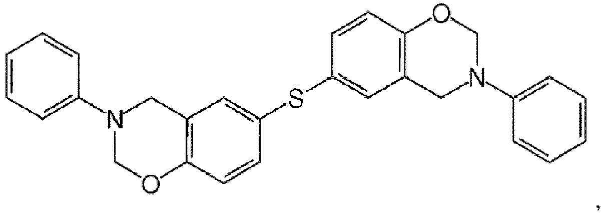 oder Ltr t 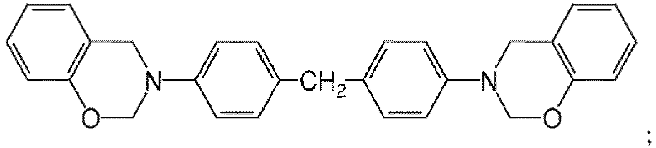 x Äquivalente von mindestens einem Primäramin, dargestellt durch die folgende Formel
Z¹⁅NH₂]ₙ
worin Z¹ ein n-valentes, organisches Radikal ist, wobei jede der -NH²-Gruppen an ein Tetrakoordinatkohlenstoffatom gebunden ist, wobei n eine ganze Zahl ist, die größer oder gleich 1 ist, und wobei w/x in einem Bereich liegt, der von 0,8 bis 10 beträgt; und
eine Supersäure.

## Revendications

1. Composition durcissable comprenant :
w équivalents d'au moins une benzoxazine représentée par la formule 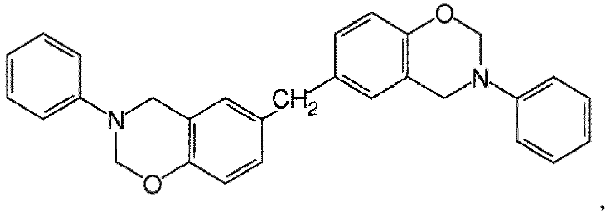 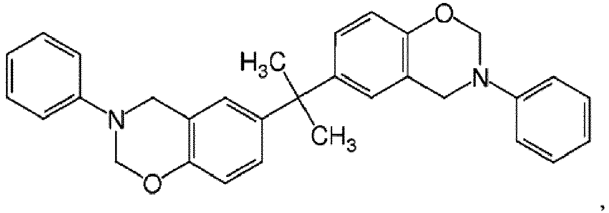 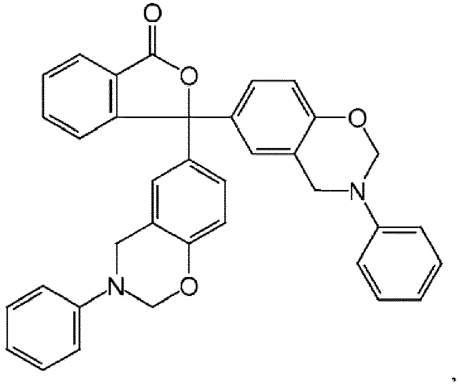 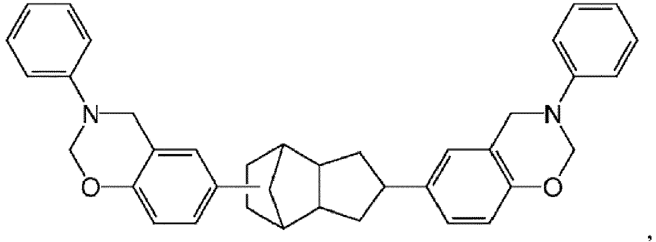 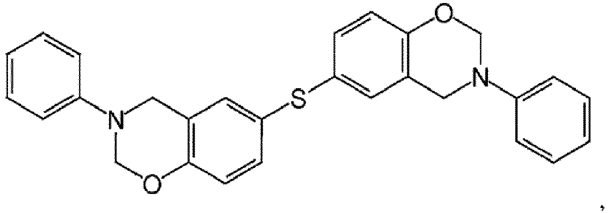 ou 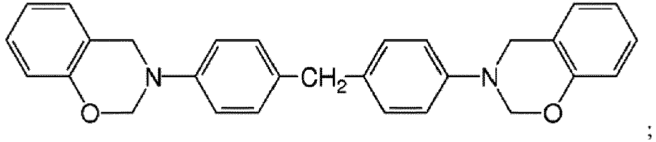
x équivalents d'au moins une amine primaire représentée par la formule
Z¹⁅NH₂]ₙ
dans laquelle Z¹ est un radical organique de valence n, dans laquelle chacun des groupes -NH₂ est lié à un atome de carbone tétracoordonné, dans laquelle n est un nombre entier supérieur ou égal à 1, et dans laquelle w/x est dans une plage allant de 0,8 à 10 ; et
un superacide.

2. Composition durcissable selon la revendication 1, dans laquelle w/x est dans une plage allant de 0,8 à 4, inclus.

3. Composition durcissable selon la revendication 1 ou 2, dans laquelle le superacide comprend de l'antimoine.

4. Composition durcissable selon l'une quelconque des revendications 1 à 3, dans laquelle Z¹ est choisi dans le groupe constitué de groupes hydrocarbylène comportant de 2 à 50 atomes de carbone, et de groupes hétérohydrocarbylène comportant de 4 à 50 atomes de carbone.

5. Composition durcissable selon l'une quelconque des revendications 1 à 4, où la composition est au stade B.

6. Produit de réaction de composants comprenant :
w équivalents d'au moins une benzoxazine représentée par la formule 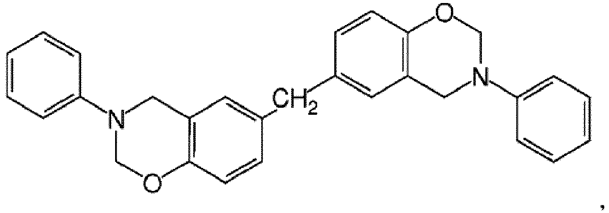 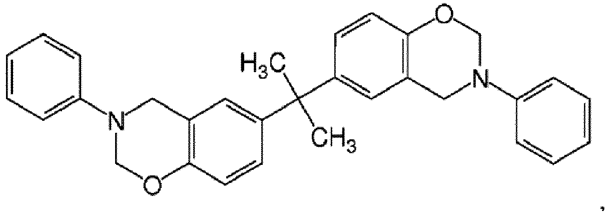 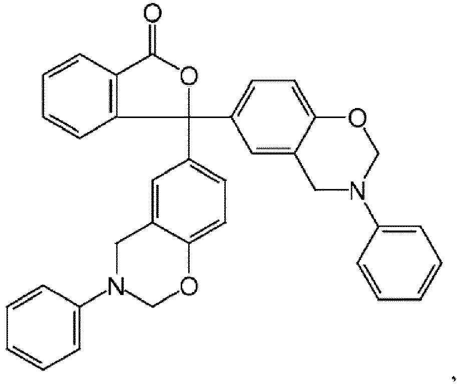 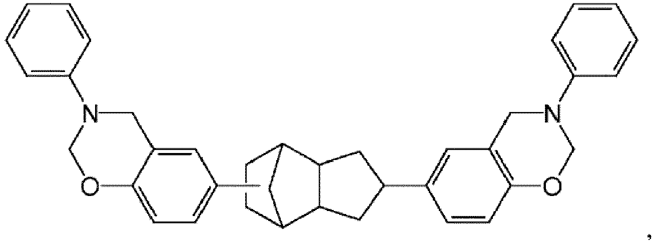 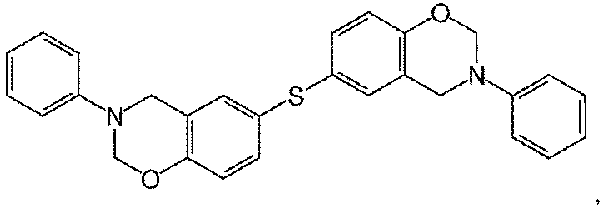 ou 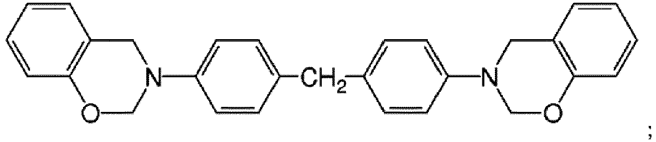
x équivalents d'au moins une amine primaire représentée par la formule
Z¹⁅NH₂]ₙ
dans lequel Z¹ est un radical organique de valence n, dans lequel chacun des groupes -NH₂ est lié à un atome de carbone tétracoordonné, dans lequel n est un nombre entier supérieur ou égal à 1, et dans lequel w/x est dans une plage allant de 0,8 à 10 ; et
un superacide.

7. Procédé comprenant le durcissement au moins partiel d'une composition durcissable, dans lequel la composition durcissable comprend :
w équivalents d'au moins une benzoxazine représentée par la formule 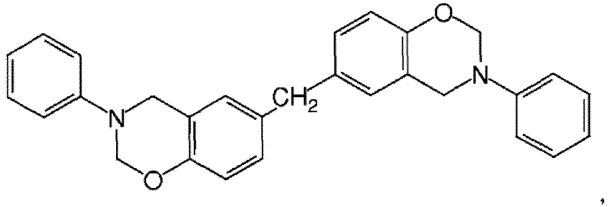 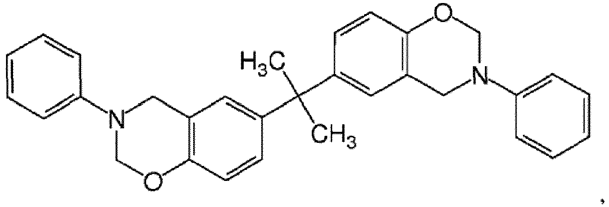 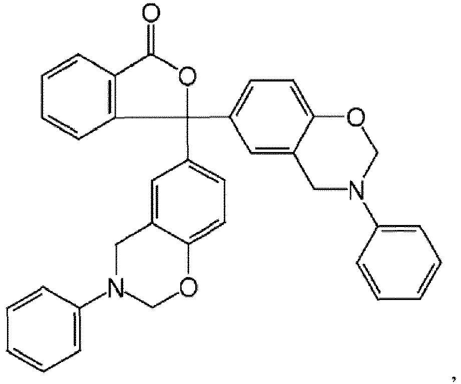 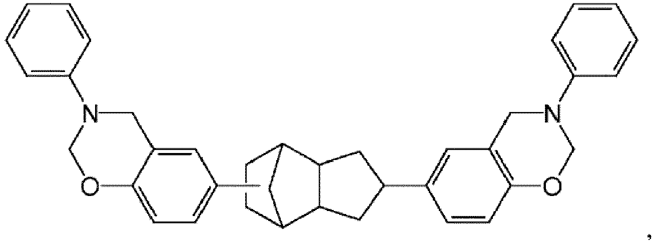 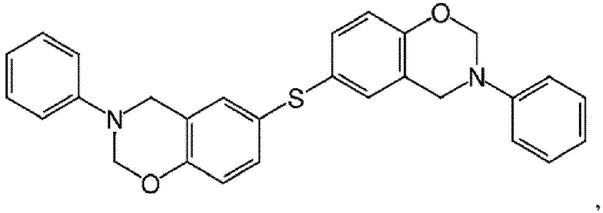 ou 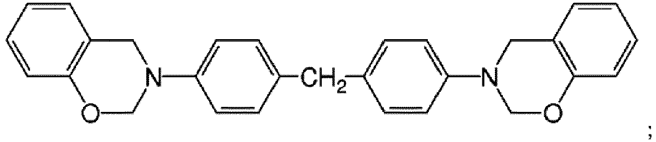
x équivalents d'au moins une amine primaire représentée par la formule
Z¹⁅NH₂]ₙ
dans lequel Z¹ est un radical organique de valence n, dans lequel chacun des groupes -NH₂ est lié à un atome de carbone tétracoordonné, dans lequel n est un nombre entier supérieur ou égal à 1, et dans lequel w/x est dans une plage allant de 0,8 à 10 ; et
un superacide.

8. Procédé selon la revendication 7, dans lequel w/x est dans une plage allant de 0,8 à 4, inclus.

9. Procédé selon la revendication 7 ou 8, dans lequel le superacide comprend de l'antimoine.

10. Procédé selon l'une quelconque des revendications 7 à 9, dans lequel Z¹ est choisi dans le groupe constitué de groupes hydrocarbylène comportant de 2 à 50 atomes de carbone, et de groupes hétérohydrocarbylène comportant de 4 à 50 atomes de carbone.

11. Procédé selon l'une quelconque des revendications 7 à 10, dans lequel la composition est au stade B.

12. Article comprenant une composition durcissable disposée sur une première protection détachable, dans lequel la composition durcissable comprend :
w équivalents d'au moins une benzoxazine représentée par la formule 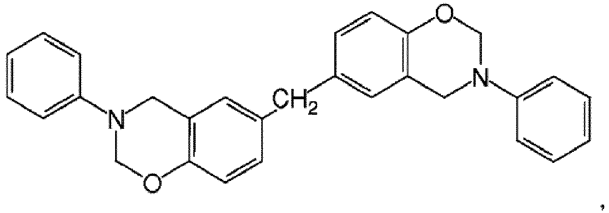 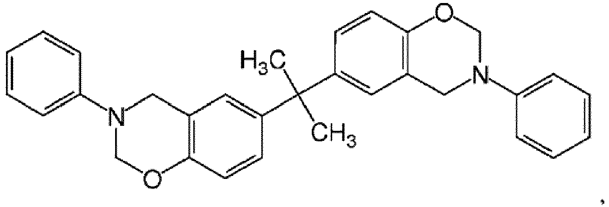 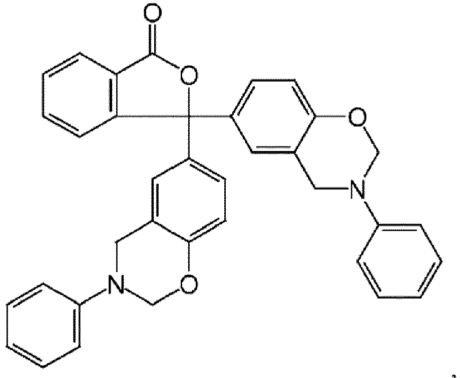 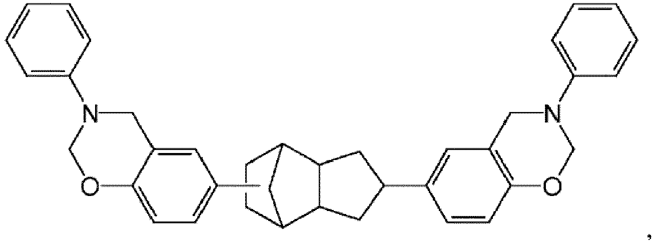 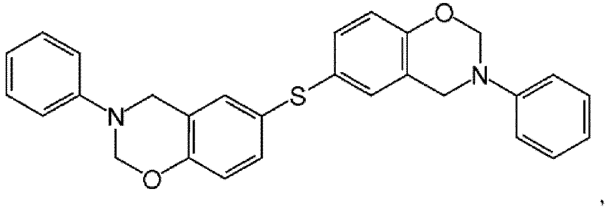 ou Ltr t 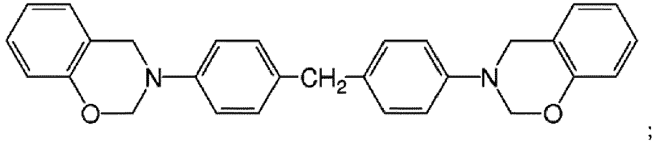
x équivalents d'au moins une amine primaire représentée par la formule
Z¹⁅NH₂]ₙ
dans lequel Z¹ est un radical organique de valence n, dans lequel chacun des groupes -NH₂ est lié à un atome de carbone tétracoordonné, dans lequel n est un nombre entier supérieur ou égal à 1, et dans lequel w/x est dans une plage allant de 0,8 à 10 ; et
un superacide.
